# EUROPEAN PATENT APPLICATION

(11) **EP 1 479 281 A1**
(43) Date of publication of application: **24.11.2004**
(21) Application number: 04076406.0
(22) Date of filing: 12.05.2004
(51) Int. Cl.: A01D 45/00

(54) **Apparatus for performing a treatment to a bed and/or a crop**

(30) Priority: 19.05.2003 NL 1023463
(71) Applicant: Van den Top, Hendrik, NL-3771 AH Barneveld (NL)
(72) Inventor: Van den Top, Hendrik, NL-3771 AH Barneveld (NL)
(74) Representative: Land, Addick Adrianus Gosling

(57) **Abstract**

The present invention relates to an apparatus for performing a bed and/or crop treatment for crops such as toadstools, comprising:
- a frame (3) provided with front and rear wheels (91,92) for moving thereof;
- a treatment part (4) which is arranged on the frame substantially in front of the front wheels or behind the rear wheels.

The invention also relates to a method for harvesting toadstools such as mushrooms, wherein these are severed by means of an apparatus according to one or more of the foregoing claims.

## Description

The invention relates to an apparatus for treating culture beds to cause crops to grow thereon. The invention also relates to an apparatus for harvesting crops cultivated on such beds. Such crops are for instance crops which can be cut off close to the ground. Such crops comprise toadstools, and more particularly mushrooms.

Many developments for harvesting such crops can already be attributed to the applicant for the present patent application. Harvesting machines resulting from these earlier developments have in the meantime been successfully applied for part of the mushroom harvest. The present invention nevertheless relates to an improved apparatus.

The present invention relates to an apparatus for performing a bed and/or crop treatment for crops such as toadstools, comprising:
- a frame provided with front and rear wheels for moving thereof;
- a treatment part which is arranged on the frame substantially in front of the front wheels or behind the rear wheels.

An advantage of placing the treatment part in front of the front drive means is that the treatment part can be manufactured with the same width as the bed. Because the treatment part can be embodied with substantially the same width as the bed, the bed can be treated over the entire width. In an embodiment to be described hereinbelow, wherein the treatment part comprises a harvesting blade, the crops can be harvested over the entire width of the bed. When this embodiment is used there will therefore be no strips with crop left behind on either side of the bed, whereby these crops no longer have to be harvested separately by hand. The bed can further be treated over the whole length, since the treatment part extends in front of the front wheels. The wheels herein remain a distance of 30-50 cm removed from the end edge of the bed during treatment of the end of the bed. The safety risk of the machine running off the machine is hereby considerably reduced.

In for instance an embodiment for treating the bed by means of for instance levelling means, the bed can be levelled over the whole width. This then similarly prevents the need for further harvesting of the sides of the bed by hand.

In a preferred embodiment the apparatus comprises height-adjusting means for adjusting the working height of the apparatus. When for instance toadstools or mushrooms are cultivated, the height of the bed varies with the number of harvests performed since renewal of the bed. Using this embodiment it becomes possible to set the working height precisely.

The height-adjusting means preferably comprise:
- front connecting means and rear connecting means for mutually connecting the front and rear drive means, wherein these connecting means are connected to each other by means of mutually engaging, toothed connection means;
- height-adjusting drive means for driving at least one of the connecting means. Height-adjusting means of this assembly provide a very simple height adjustment wherein the front and rear side of the apparatus are uniformly raised or lowered. Such height-adjusting means are furthermore very robust and very low-maintenance. Driving of the wheels can also be realized in simple manner using such a height-adjusting device, as will be further described hereinbelow.

The height-adjusting drive means preferably comprise a channel which is arranged in a connecting means, and a drive pin is preferably movable in this channel for adjusting the height of the apparatus. By varying the height of this pin relative to the apparatus, the height of the connecting means relative to the apparatus is varied, whereby the height of the apparatus can be adjusted. A practical embodiment hereof is that the pin is arranged eccentrically on a rotating part for driving. The height of the apparatus can hereby be adjusted by driving the rotating part.

By driving these height-adjusting drive means by means of a motor, the height of the apparatus can be adjusted in very simple manner by actuating a button.

In a further preferred embodiment, the apparatus comprises four-wheel driving. It has been found in practice that in relatively heavy operations, such as a mushroom harvest with many mushrooms on the bed, the known apparatuses have problems with the limited grip for driving the apparatus. Owing to the compact arrangement of the four wheels adjacently of the frame and the arrangement of the treatment part in front of the frame with the wheels, a construction for four-wheel driving becomes possible which is sufficiently robust and low-maintenance for normal practice. In prior art devices a robust and low-maintenance four-wheel driving was prevented in particular by the placing of a discharge conveyor for discharging harvested mushrooms. Such a construction is disclosed in the Netherlands publication NL 77 12814.

The wheels are preferably further provided with a predetermined profile or drive contact surface, such as a toothing or a substantially V-shaped truncated rail. Such profiles or drive contact surfaces have the advantage that the drive forces can be greater per wheel.

For the purpose of a particularly low-maintenance driving of the wheels, the drive means comprise toothed wheels for driving of wheel driving pins, and wheel driving pins arranged on the wheels for engaging in the teeth of the driving toothed wheel. During use the wheels of apparatuses according to the present invention often come into contact with material of the culture bed. Such material of the culture bed is in practice often a fibrous peat material. A prior art chain drive requires a great deal of maintenance due to fouling by these materials by the culture bed. The solution according to the present invention is that the wheels of the apparatus are provided with drive pins which are driven by teeth of a toothed wheel situated above the wheel. A chain will hereby no longer come into contact with fouling materials.

A further improvement of this drive is embodied by scraping means arranged close to the pins, so that possible fouling such as peat strands are scraped off by the scraping means as the wheel driving pins pass the scraping means. Even peat strands possibly coming into contact with the drive pins will hereby be automatically removed during use.

In a further preferred embodiment the treatment part comprises a blade for harvesting the crops, as well as transport means for discharging the harvested crops from the blade. The apparatus can be deployed as harvesting machine by applying this blade with transport means for discharging the harvested crops from the blade.

The blade can preferably reciprocate transversely of the direction of travel. Such a reciprocating movement provides the blade with a more efficient cutting function. The blade is preferably driven electrically.

The treatment part for harvesting further comprises a carrying device for cleaning transport of the crops from the blade to the conveyor. When harvesting without such a carrying device, toadstools for harvesting will be pushed over in forward direction upon contact with the blade. The toadstool, more in particular the crown of the toadstool, is hereby brought into contact with the bed, whereby it will be soiled. There is then also the risk of the stalk of the toadstool being cut obliquely. Such results have an adverse effect on the market value of the toadstool. The carrying device engages on the toadstool before it can be pushed over by the blade, in order to hold it upright during cutting and optionally thereafter. The toadstool will hereby not be pushed over, not be soiled and/or not be severed obliquely but straight.

In a further preferred embodiment, at least the front or the rear connecting means are provided with adjusting means for making the apparatus tiltably adjustable. The apparatus as a whole can hereby be tilted slightly, whereby the angle of the blade relative to the bed can be slightly adjusted for a harvest-specific cutting characteristic.

The apparatus preferably further comprises a cable drum for unrolling transport of an energy supply cable and a drive motor for drivable rolling-up of the cable drum. Owing to the presence of such a manner of energy supply, the apparatus is not dependent on a portable energy source.

In an alternative embodiment the treatment part comprises a soil working device for working the culture bed. Operations which can be performed herewith are turning and/or levelling of the bed and lifting of the stumps or remnants of the stalks of the toadstools left behind after harvesting. By placing the treatment part on the front side of the machine in front of the front wheels, it becomes possible as already described in the foregoing to treat the bed over the full width.

A further aspect of the present invention relates to a method for harvesting toadstools such as mushrooms, wherein these are severed by means of an apparatus as specified in the foregoing.

In a further embodiment the apparatus comprises control means for separately controlling the different drivable components such as the wheels, the blade, the conveyor belt or the brush. Further advantages, features and details of the present invention will be further described with reference to the annexed figures, in which:
- fig. 1 is a perspective view of an embodiment according to the present invention;
- fig. 2 shows a detail of the embodiment of figure 1 in perspective;
- fig. 3 shows a further detail in perspective of the embodiment of figure 1.

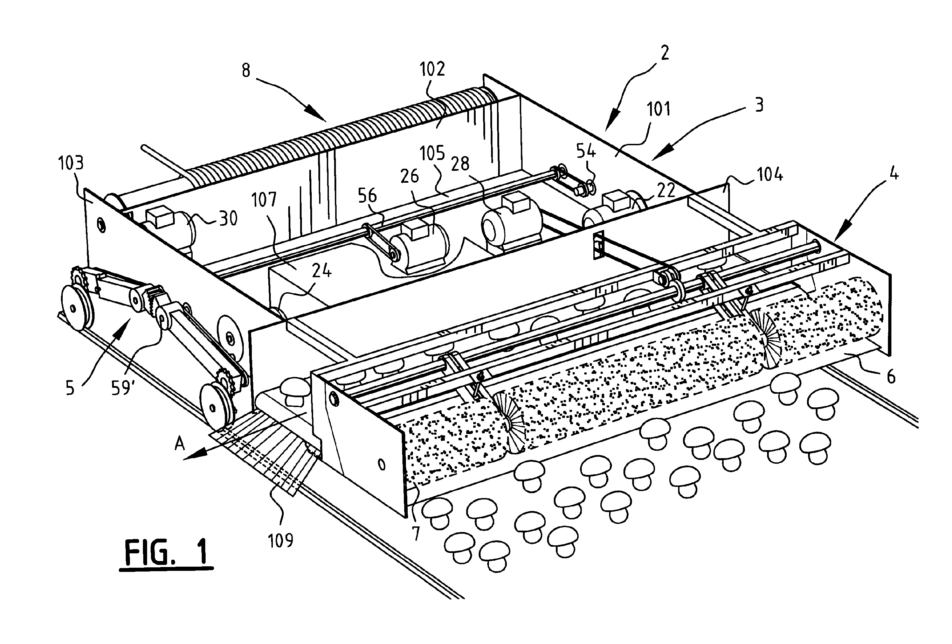

An embodiment (fig. 1) according to the present invention relates to a toadstool harvesting machine 2. This apparatus 2 comprises a drive frame 3 as well as a treatment or harvesting part 4. This harvesting part 4 is removable from frame 3 for coupling of another treatment part, such as a levelling device or a turning device. Frame 3 is formed by a number of plates 101, 102, 103, 104, as well as a base plate 105. The frame is provided with a number of drive motors 24, 26, 28, 22, 30, 72. These motors will be further described together with the components which they drive. The components have the same numbering in all figures.

Situated on either side of frame 3 are height-adjusting means 5 for height adjustment of the frame. These are connected to side plates 101, 103 of the frame by means of shafts 56, 59, 59'. Shaft 56 also functions as drive shaft for driving the wheels, which will be further described hereinbelow.

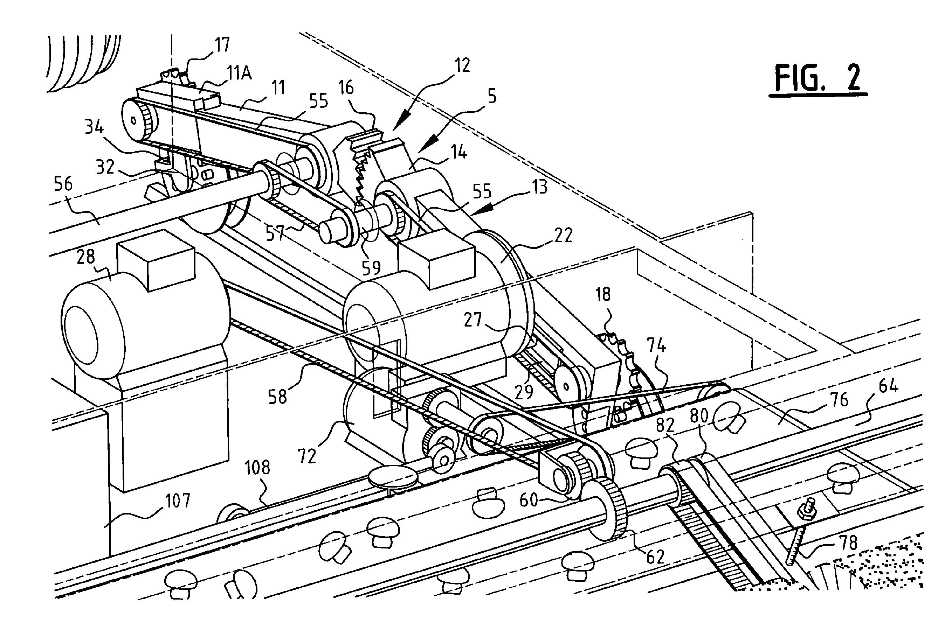

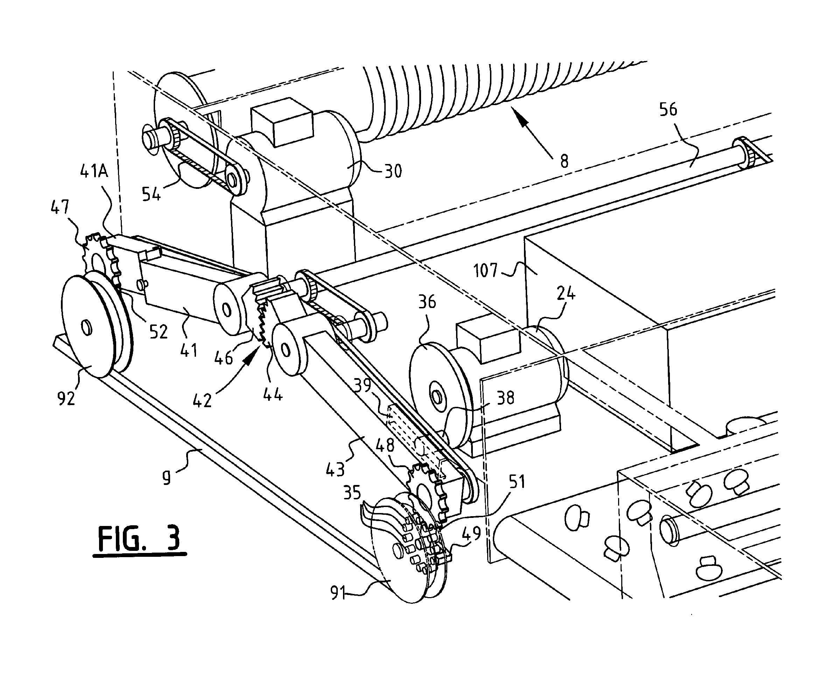

The operation of the height adjustment will be further described with reference to figure 3. The operation of the height adjustment on the other side of the apparatus, as shown in figure 2, functions in the same manner.

Two support arms 41, 43 extend on either side from shafts 56, 59'. On the end of support arms 41, 43 wheel supports 51, 52 are arranged in similar manner to the more clearly visible wheel support 32, which is mounted on support arm 11a as shown in figure 2. Wheels 91, 92 are mounted on wheel supports 51, 52 by means of a shaft.

Two toothed coupling pieces 44, 46 are situated on the sides of support arms 41 and 43 directed toward each other. These coupling pieces are mutually coupled by means of the toothing so that they must co-displace with each other. Both support arms will hereby tilt downward if one of them is forced downward. In this case frame 3 will move upward. In the opposite case the frame will move downward.

Forcing of support arm 43 downward relative to the frame takes place by means of rotating the pin 38 downward. Pin 38 protrudes from the frame into channel 39 of support arm 43. Pin 38 is arranged eccentrically on disc 36 which is coupled to motor 24 of the frame. Pin 38 is moved relative to the frame by causing disc 36 to rotate by means of motor 24. Support arm 43 will hereby also move relative to the frame. Support arm 41 will likewise rotate owing to the coupling by means of coupling pieces 44 and 46 and the mutual toothing thereof, whereby the frame will move in vertical direction while itself remaining horizontally positioned.

On the other side of the apparatus, as shown in figure 2, there is also situated an identical, albeit mirrored height-adjusting mechanism. The height-adjusting mechanism for this side is operated by means of drive motor 22. The pin 27 driven by this motor moves in channel 29 so as to adjust the height of this side of the machine. Both sides of the machine can therefore be adjusted in the height independently of each other. If the bed is slightly sloping, it hereby becomes possible to have the machine follow the slope of this bed. A tilting adjustment is also arranged in support arm 11, 11a in similar manner as in support arm 41, 41a.

In order to bring about a rotation relative to the horizontal plane of the frame, support arm 41 can be displaced relative to 41a. The frame can hereby be tilted slightly, which has the advantage for instance that the blade can be tilted slightly relative to the bed for a specific angle of cutting into the crops.

Harvesting device 4 is placed on the front side of frame 3. This harvesting device 4 can be replaced by soil working devices, for instance for turning or levelling the soil of a bed. A cutting blade 6 is arranged in this harvesting module 4. Because the whole harvesting module is placed in front of the front wheels of frame 3, the working width of the blade can cover the full width of the bed. The blade is provided with a drive device (not shown) for moving the blade reciprocally for the purpose of cutting. This drive device for the blade is driven by means of a motor 72 and the rod 108 driven by the motor via an eccentric.

A brush 7 is positioned above the blade. This brush is rotatable at the same speed of forward movement of the machine for the purpose of holding the toadstools such that they do not topple over in forward direction when being cut by the blade. An alternative for the round brush is a belt-like brush. Such a belt-like brush is shown in figure 2 of the Netherlands publication NL 77 12814. This figure must be deemed as specifically interpolated herein, in addition to the description thereof included in this publication.

Such a conveyor belt-like brush transports the toadstools over the knife in the direction of conveyor belt 76. Conveyor belt 76 moves in the direction of arrow A (fig. 1) so as to discharge the toadstools to the right-hand side of the apparatus. Conveyor belt 76 can likewise move in the other direction to discharge the toadstools to the left-hand side of the machine as seen in the direction of travel. At the end of the conveyor belt there is arranged a soft guide for transferring the toadstools to a further storage means.

The round or belt-like carrying brush is height-adjustable by means of adjusting screws 78. Driving of the brush takes place by means of drive belt 82. Drive belt 82 lies round a drive wheel of drive shaft 64. Drive shaft 64 is driven by drive belt 58 by means of toothed wheels 60 and 62. Drive belt 58 is connected to drive motor 28, whereby drive motor 28 serves for driving carrying brush 7. The driving by means of toothed wheels 60,62 placed against each other enables simple exchange between the carrying brush and carrying brush belt in that these units can be removed without components of the driving connection having to be assembled or disassembled. The toothed wheels engage mutually in simple manner when the module is placed.

Carrying brush 7 is fixed to drive shaft 64 by means of support arm 80. Support arm 80 is bearing mounted relative to drive shaft 64. The adjusting screw 78 for height adjustment of the brush is connected to support arm 80.

Driving of the wheels of the frame takes place with motor 26, which is connected to a drive shaft 56 by means of a drive belt. The driving mechanism is arranged on the left and right side of the machine, in similar manner to the height-adjustment. The driving mechanism of the wheels will be described on the basis of figures 2 and 3. Drive shaft 56 is connected to the rear support arms 11,41, in which it is bearing mounted. The front support arms 13, 43 are further connected to the frame by means of auxiliary shafts 59. Auxiliary shafts 59 are connected to the drive shaft by means of drive belt 57. Auxiliary shafts are likewise bearing mounted in support arms 13 and 11. Toothed wheels 17, 18, 47, 48 are situated on the end of the support arms. These toothed wheels are driven from drive shaft 56 and auxiliary shaft 59 by means of drive belts or chains 55. As can best be seen in wheel 91 of figure 3, the teeth of toothed wheel 48 engage in drive pins 35 of wheel 91. Wheel 91 is hereby driven. Because this is embodied in similar manner in all four wheels, four-wheel driving of the machine is realized. As already described in the foregoing, this driving construction is highly unsusceptible to fouling and very easy to clean. In order to further prevent possible fouling, scraping blocks 49 are positioned closely to drive pins 35. One block 49 is shown; two of such scraping blocks are preferably positioned per wheel. Scraping blocks 49 serve to scrape off sand and, primarily, peat remnants from pins 35. After scraping blocks 49 have scraped off peat remnants, possibly remaining pieces of peat will be pushed out from between the pins by the teeth of toothed wheel 48.

In day-to-day practice the wheels travel over edges of the bed. These can be bed container edges or for instance a rail. The travel surface of the wheels is shown here as a U-shape with oblique side walls. It is also possible to use rubber wheels, steel wheels or toothed wheels for propelling the frame. The choice of the wheels will be optimized on the basis of the surface over which they have to travel.

The machine is further provided with a cable reel 8 for energy supply. In one embodiment this cable reel is driven by means of motor 30. Motor 30 is connected to the cable reel via drive belt or chain 54. A normal electric motor could overheat due to blocking of the reel if the machine stops temporarily. A so-called idling motor is applied in order to prevent such overheating. Such a motor is provided with means for preventing overheating during standstill, wherein a certain force must still be produced in order to prevent the reel from unrolling again. During unrolling of the reel the motor is switched off. The reel, driven by the motor, will roll the cable up again during travel of the machine back over the bed after harvesting. The use of such a reel with motor is recommended, since the rolling-up forces become very large in the case of a relatively long cable of for instance more than 20, 30 or 40 metres.

For the further purpose of control thereof, the machine comprises for each electric motor separate control means in a housing (107). These control means can switch on all drive motors separately and give them an individual speed. It hereby becomes possible to optimally adapt the travel speed, the speed of movement of the blade and the rotation speed of the brush to each other for the purpose of a harvesting method wherein the toadstools can for instance be harvested as undamaged as possible but still at a relatively high speed. Using such an apparatus it is even possible to harvest mushrooms which must be of the highest quality in respect of separate sale to consumers. Such mushrooms have heretofore been harvested manually, which is very expensive.

The skilled person will be able to make many modifications on the basis of the different aspects of the above described embodiment. The rights sought are defined by the appended claims.

## Claims

1. Apparatus for performing a bed and/or crop treatment for crops such as toadstools, comprising:
- a frame provided with front and rear wheels for moving thereof;
- a treatment part which is arranged on the frame substantially in front of the front wheels or behind the rear wheels.

2. Apparatus as claimed in claim 1, comprising height-adjusting means for adjusting the working height of the apparatus.

3. Apparatus as claimed in claim 2, wherein the height-adjusting means comprise:
- front connecting means and rear connecting means for mutually connecting the front and rear drive means, wherein these connecting means are connected to each other by means of mutually engaging, toothed connection means;
- height-adjusting drive means for driving at least one of the connecting means.

4. Apparatus as claimed in claim 3, wherein the height-adjusting drive means comprise a channel which is arranged in a connecting means, and a drive pin is movable in this channel for adjusting the height of the apparatus.

5. Apparatus as claimed in one or more of the foregoing claims, wherein the front and/or the rear wheels are drivable by means of drive means.

6. Apparatus as claimed in one or more of the foregoing claims, comprising four-wheel driving for propelling the apparatus.

7. Apparatus as claimed in claim 5 or 6, wherein the wheels are provided with a predetermined profile or drive contact surface, such as a toothing or a substantially V-shaped truncated rail.

8. Apparatus as claimed in one or more of the foregoing claims, wherein the drive means comprise:
- driving toothed wheels for driving wheel driving pins,
- wheel driving pins arranged on the wheels for engaging in the teeth of the driving toothed wheel.

9. Apparatus as claimed in claim 8, comprising scraping means arranged such that possible fouling, such as peat strands, are scraped off by the scraping means as the wheel driving pins pass the scraping means.

10. Apparatus as claimed in one or more of the foregoing claims, wherein the treatment part comprises a blade for harvesting the crops, as well as transport means for discharging the harvested crops from the blade.

11. Apparatus as claimed in claim 10, wherein the blade can reciprocate transversely of the direction of travel.

12. Apparatus as claimed in claim 10 or 11, further comprising a carrying device for cleaning transport of the crops from the blade to the conveyor.

13. Apparatus as claimed in claim 12, wherein the carrying device comprises brush bristles for engaging the toadstools.

14. Apparatus as claimed in claim 12 or 13, wherein the carrying device comprises a cylindrical or belt-like brush

15. Apparatus as claimed in one or more of the foregoing claims, wherein at least the front or the rear connecting means are provided with adjusting means for making the apparatus tiltably adjustable.

16. Apparatus as claimed in one or more of the foregoing claims, comprising a cable drum for unrolling transport of an energy supply cable and a drive motor for drivable rolling-up of the cable drum.

17. Apparatus as claimed in one or more of the foregoing claims, wherein the treatment part comprises a soil working device for working the culture bed.

18. Apparatus as claimed in one or more of the foregoing claims, wherein the treatment part comprises a levelling device for levelling of the bed.

19. Apparatus as claimed in one or more of the foregoing claims, comprising control means for separately controlling the different drivable components such as the blade, the conveyor belt or the brush.

20. Method for harvesting toadstools such as mushrooms, wherein these are severed by means of an apparatus as claimed in one or more of the foregoing claims.
